(19) Europäisches Patentamt
European Patent Office
Office européen des brevets

(11) Veröffentlichungsnummer: **0 045 719**
**B1**

# (12) EUROPÄISCHE PATENTSCHRIFT

(45) Veröffentlichungstag der Patentschrift: **02.05.85**

(51) Int. Cl.[4]: **C 09 B 69/06,** C 09 B 44/18

(21) Anmeldenummer: **81810304.6**

(22) Anmeldetag: **27.07.81**

(54) **Kristalline Salze von Triazolfarbstoffen.**

(30) Priorität: **01.08.80 CH 5875/80**

(43) Veröffentlichungstag der Anmeldung: **10.02.82 Patentblatt 82/6**

(45) Bekanntmachung des Hinweises auf die Patenterteilung: **02.05.85 Patentblatt 85/18**

(84) Benannte Vertragsstaaten: **CH DE FR GB IT LI**

(56) Entgegenhaltungen:
**BE - A - 620 990**
**DE - A - 1 925 475**
**DE - B - 1 077 808**
**GB - A - 2 054 631**

(73) Patentinhaber: **CIBA-GEIGY AG, Postfach, CH-4002 Basel (CH)**

(72) Erfinder: **Zink, Rudolf, Alemannenstrasse 2, CH-4106 Therwil (CH)**
Erfinder: **Loew, Peter, Dr., Concordiastrasse 23, CH-4142 Münchenstein (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 045 719 B1

**Beschreibung**

Die Erfindung betrifft neue kristalline Salze von Triazolfarbstoffen, Verfahren zu deren Herstellung und deren Verwendung als Farbstoffe zum Färben und Bedrucken von Textilmaterialien, welche mit kationischen Farbstoffen färbbar sind.

Bekannt sind (z.B. aus der DE-AS 1 077 808) kationische Triazol-Farbsalze der Struktur

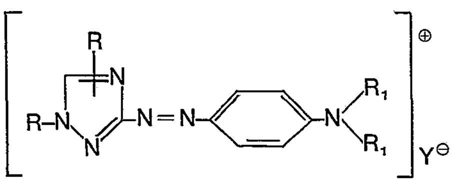

worin R den $CH_3$- oder $C_2H_5$-Rest, $R_1$ den $C_1$–$C_4$-Alkyl-Rest und Y Cl, $ZnCl_4$ oder $CH_3SO_4$ bedeuten.

Die Aufarbeitung dieser bekannten Triazol-Farbstoffe in Form der Chlorid- oder $CH_3SO_4$-Salze bereitet jedoch Schwierigkeiten bei der Isolierung, da diese Salze meistens als Isomerengemische anfallen und deshalb schlecht und bei Raumtemperatur überhaupt nicht kristallisieren. Aus diesem Grund hat man vorgeschlagen sie als schwerlösliche Zinkchlorid-Doppelsalze umzufällen, was jedoch technische und ökologische Nachteile (umweltbelastende Schwermetallsalze) mit sich bringt.

Aufgabe der Erfindung war es daher, von den genannten Triazolfarbstoffen eine Salzform herzustellen, die diese Nachteile ausschaltet, d.h. eine Salzform, welche zinkfrei ist und sich durch eine gute Kristallisationsfähigkeit auszeichnet.

Überraschenderweise wurde nun gefunden, dass die entsprechenden Brom- bzw. Iodsalze gut kristallisierende Verbindungen ergeben und daher die Aufarbeitung der Farbstoffanschlämmung durch einfache Massnahmen, wie Filtration erlauben.

Die Erfindung betrifft somit Triazolfarbsalze der Formel I

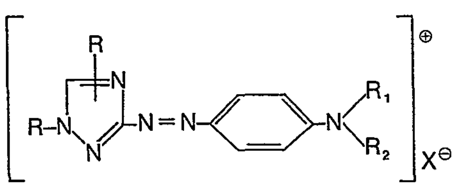
(I)

worin bedeuten:

R den $CH_3$- oder $C_2H_5$-Rest,

$R_1$ einen $C_1$–$C_4$-Alkyl-Rest,

$R_2$ einen gegebenenfalls substituierten $C_1$–$C_4$-Alkyl-Rest, und

X das Br- oder J-Ion.

$R_1$ und/oder $R_2$ in der Bedeutung eines $C_1$–$C_4$-Alkylrestes stellen z.B. einen unverzweigten oder verzweigten Alkylrest dar. Es handelt sich beispielsweise um den Metyhl-, Äthyl-, n- und iso-Propyl- oder n-, sec.- oder tert.-Butylrest. Im Falle von $R_2$ kann dieser Alkyl-Rest substituiert sein. Als Substituenten kommen z.B. in Frage: Phenyl, Chlorphenyl, Bromphenyl, $C_1$–$C_4$-Alkylphenyl, $C_1$–$C_4$-Alkoxyphenyl, Methoxy, Äthoxy, OCO-phenyl (gegebenenfalls im Phenylrest durch $C_1$–$C_4$-Alkyl substituiert) und OCOO-phenyl.

In den wegen der besonders guten Kristallisationsfähigkeit bevorzugten Verbindungen der Formel I bedeutet $R_1$ einen $C_1$–$C_4$-Alkylrest und $R_2$ einen substituierten $C_1$–$C_4$-Alkylrest und R und X haben die unter Formel I angegebene Bedeutung.

Von besonderem Interesse sind Verbindungen worin R den $CH_3$- und $R_1$ den $CH_3$- oder $C_2H_5$-Rest, $R_2$ einen durch Phenyl oder Benzoyloxyrest substituierten $C_1$–$C_4$-Alkylrest, vor allem den Benzylrest und X das Brom-Ion darstellen.

Die Triazolfarbsalze der Formel I stellen sehr gut kristallisierende Farbsalze dar, die zinkfrei sind und somit keine ökologischen Probleme aufweisen. Trotzdem besitzen die neuen Triazolfarbsalze der Formel I eine gute Wasserlöslichkeit. Das niedrigere Molekulargewicht z.B. der neuen Bromidsalze gegenüber den bekannten Zinkchlorid-Doppelsalzen hat weiterhin zur Folge, dass diese neuen Farbsalze einerseits Trocknungskosten einsparen und andererseits eine höhere Farbausbeute ergeben, welche für eine hochkonzentrierte Handelsform vorteilhaft ist.

Die Herstellung dieser neuen Triazolfarbsalze der Formel I erfolgt beispielsweise derart, dass man z.B. ein Alkylsulfat-Salz der Formel II

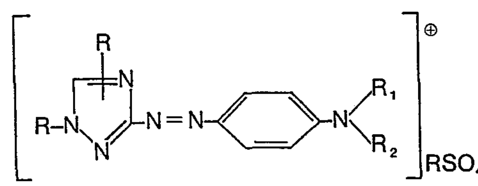
(II)

worin die Symbole R, $R_1$ und $R_2$ die unter Formel I angegebene Bedeutung haben, im wässrigen Medium mit Bromwasserstoffsäure oder Iodwasserstoffsäure oder deren Ammonium-, Alkali- oder Erdalkalisalze umsetzt.

Als derartige Salze kommen beispielsweise in Frage: Lithiumbromid, Natriumbromid, Kaliumbromid, Magnesiumbromid, Calciumbromid, Bariumbromid, Lithiumiodid, Natriumiodid, Kaliumiodid, Calciumiodid, Bariumiodid, Ammoniumbromid, Ammoniumiodid und substituierte Ammoniumsalze wie Tetraehtylammoniumbromid und Tetraethylammoniumiodid; die genannten Salze können als wässrige Lösung oder in fester Form verwendet werden.

Man arbeitet vorteilhaft bei Raumtemperatur, d.h. zwischen etwa 15° und 30 °C.

Die Alkylsulfate der Formel II, welche bekannt sind, werden z.B. erhalten, indem man Triazolverbindungen der Formel III

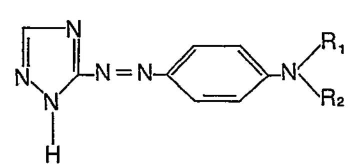
(III)

worin $R_1$ und $R_2$ die unter Formel I angegebene Bedeutung haben, im wässrigen Medium bei

Raumtemperatur mit Dimethylsulfat oder Diethylsulfat in einer Reaktion alkyliert und quaterniert.

Die Triazolverbindungen der Formel III wiederum erhält man nach bekannter Art und Weise, z. B durch Diazotieren eines Aminotriazols der Formel IV

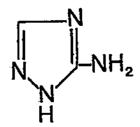 (IV)

und Kuppeln auf eine Kupplungskomponente der Formel V

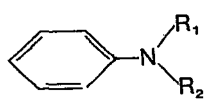 (V),

worin $R_1$ und $R_2$ die unter Formel I angegebene Bedeutung haben.

Verwendung finden die neuen Triazolfarbsalze der Formel I als Farbstoffe zum Färben, und unter Zusatz von Binde- und Lösungsmitteln zum Bedrucken von mit kationischen Farbstoffen anfärbbaren Materialien, insbesondere Textilmaterialien, die z. B. aus Homo- oder Mischpolymerisaten des Acrylnitrils bestehen, oder synthetische Polyamide oder Polyester, welche durch saure Gruppen modifiziert sind. Desweiteren dienen die neuen kationischen Farbsalze auch zum Färben von Nasskabel, Kunststoffmassen, Leder und Papier. Man färbt vorzugsweise aus wässrigem, neutralem oder saurem Medium nach dem Ausziehverfahren, gegebenenfalls unter Druck oder nach dem Kontinueverfahren. Das Textilmaterial kann dabei in verschiedenartigster Form vorliegen, beispielsweise als Faser, Faden, Gewebe, Gewirke, Stückware und Fertigware.

Durch die Applikation der Farbstoffe lassen sich sehr farbstarke rote Färbungen bzw. Drucke herstellen, die sich durch sehr gute Allgemeinechtheiten, wie Licht-, Dekatur-, Wasch- und Schweissechtheit auszeichnen.

In den folgenden Beispielen bedeuten, sofern nichts anderes angegeben ist, die Teile (T) Gewichtsteile, die Prozente Gewichtsprozente und die Temperaturen sind in Celsiusgraden angegeben. Unter Isomerengemisch ist ein solches zu verstehen, welches ein Farbsalz mit einem Triazolrest der Formel

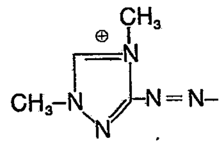 ,

einem Triazolrest der Formel

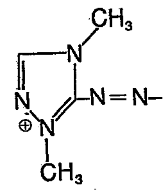

und einem Triazolrest der Formel

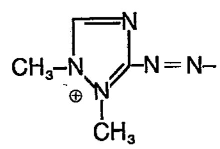

enthält.

Beispiel 1

a) 15,5 g 3-Amino-1,2,4-triazol werden in üblicher Art und Weise diazotiert, auf 36,4 g N-Benzyl-N-methylanilin gekuppelt und der gebildete Azofarbstoff filtriert.

b) Der unter a) erhaltene feuchte Nutschkuchen wird in Wasser angeschlämmt und durch Zugabe von Wasser auf ein Gesamtvolumen von 230 ml gestellt. Unter Rühren gibt man 15 ml 10n Natronlauge zu, kühlt auf 10° und versetzt mit 62,5 g Dimethylsulfat. Während 5 Std. hält man den pH bei 4–6 durch Zugabe von ca. 30 ml 10n Natronlauge; Temperatur 10–20°. Nach beendeter Methylierung/Quaternierung liegt das Farbsalz-Isomerengemisch als Emulsion vor, Volumen ca. 330 ml.

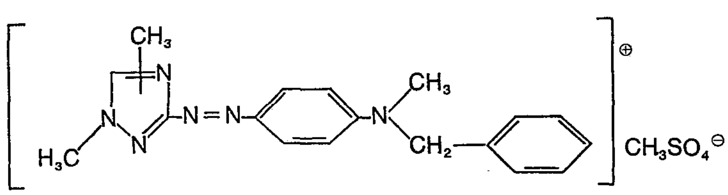

c) Die unter b) erhaltene Emulsion von ca. 330 ml wird mit Wasser auf ein Volumen von 450 ml gestellt. Bei 20–25° versetzt man mit 112 g Bromwasserstoffsäure (48%) und rührt während 3 Stunden bei Raumtemperatur, wobei das Bromidsalz auskristallisiert. Die Kristallisation kann durch Impfkristalle beschleunigt werden. Zur vollständigen Ausfällung des Produktes stellt man den pH-Wert auf 5 durch Zutropfen von ca. 70 ml 10n Natronlauge. Nach 1 Stunde wird das Farbsalz-Isomerengemisch der Formel

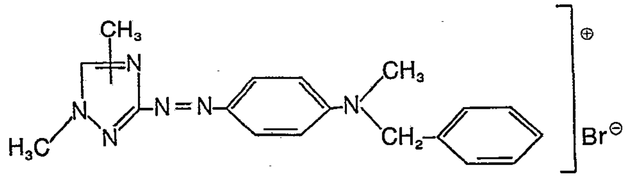

abfiltriert und im Vakuum bei 60–70° getrocknet. Man erhält so 83,7 g trockenen Farbstoff, welcher zu mehr als 50 g/l Wasser von 30 °C löslich ist und Polyacrylnitril-Fasern in roten Tönen mit sehr guten Echtheiten färbt.

Beispiel 2

a) 330 ml der wässrigen Emulsion aus Beispiel 1, (b), enthaltend ca. 80 g (= ca. 24%) an Farbsalz-Isomerengemisch der Formel

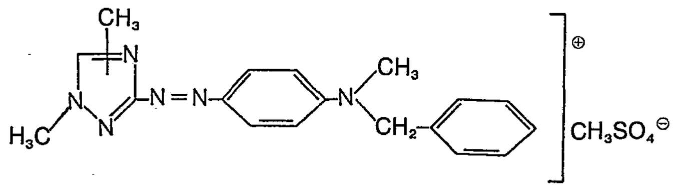

werden auf eine Temperatur von ca. 50–55° gestellt. Der pH-Wert des Gemisches beträgt ca. 1,0. Die Lösung wird nun mit 60 g wasserfreiem Natriumsulfat portionenweise innerhalb 20 Minuten versetzt und noch ca. 30 Minuten bei einer Temperatur von 50–55° gerührt.

Das Gemisch wird während 1 bis 2 Stunden bei 50–55° zur Schichtentrennung stehen gelassen. Als leichte Phase scheidet sich eine dunkle, konzentrierte Farbstofflösung ab (ca. 100 g). Die schwere wässrige Phase (ca. 260 ml) enthält eine unwesentliche Menge Farbstoff. Diese schwere Phase wird via Untenauslauf abgetrennt.

Die leichte Farbstoffphase enthält ca. 80% des obigen Farbstoffsalzes, ca. 17% Wasser und ca. 3% anorganisches Salz (vorwiegend $Na_2SO_4$). Das bedeutet einen etwa 3,5mal so hohen Farbstoffgehalt wie in der eingesetzten aus der Synthese erhaltenen Farbstoffemulsion.

b) Die unter a) erhaltenen ca. 100 g bzw. ca. 81 ml der konzentrierten Farbstofflösung werden in 720 ml Wasser bei 25° gelöst. Dazu gibt man unter Rühren innert ½ Stunde 48 g festes Natriumbromid. Die Kristallisation kann durch Zugabe von Impfkristallen eingeleitet werden. Nach 2 Stunden ist das Farbsalz-Isomerengemisch durchkristallisiert und wird abfiltriert. Nach dem Trocknen bei 60–70° im Vakuum erhält man 79,2 g trockenen Farbstoff (Isomere) der Formel

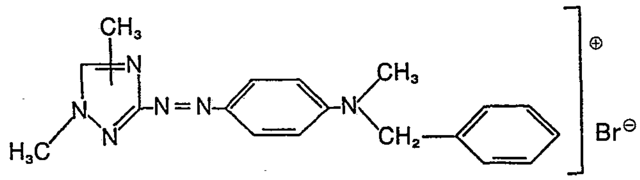

welcher Polyacrylnitril-Fasern in roten Tönen mit sehr guten Echtheiten färbt. Schmelzpunkt: 110–114°. Gehalt an Br: 22,0% (berechnet: 19,9%).

Beispiel 3

a) 60 g 3-Amino-1,2,4-triazol werden in üblicher Art und Weise diazotiert und mit 106 g N,N-Diäthylanilin gekuppelt. Das Reaktionsprodukt wird filtriert.

b) Der unter a) erhaltene feuchte Nutschkuchen wird in Wasser angeschlämmt und durch Zugabe von Wasser auf ein Gesamtvolumen von 500 ml gestellt. Bei 15 bis 20° lässt man 13,3 g Dimethylsulfat innerhalb ca. 10 Minuten zulaufen und wartet bis der pH-Wert ins saure Gebiet absinkt. Sobald pH 4 erreicht wird, gibt man ca. 8 ml Natriumhydroxid-Lösung (17%ig) zu, bis pH 6,5 erreicht ist. Nun lässt man 205,7 g Dimethylsulfat innerhalb 2–3 Stunden zufliessen. Dabei wird der pH-Wert mit weiteren ca. 300 ml 17%iger Natriumhydroxid-Lösung bei pH 6,5 und die Temperatur der exothermen Reaktion mit insgesamt ca. 500 g Eis bei 25–30° gehalten. Nach beendeter Zugabe des Dimethylsulfats wird 30 Minuten bei pH 6,0–7,5 nachgerührt, wobei man die Temperatur auf 40–45° ansteigen lässt. Hierauf wird der pH-Wert mit wenig Salzsäure (38%ig) auf pH 1,5–2,0 gestellt. Das Endvolumen beträgt ca. 1300 ml.

c) In einem Scheidetrichter mit Doppelmantel werden 550 ml (= ca. 550 g) der wässrigen Farbstofflösung erhalten aus der Synthese (nach b), enthaltend ca. 71 g (= 13%) des Farbsalz-Isomerengemisches der Formel

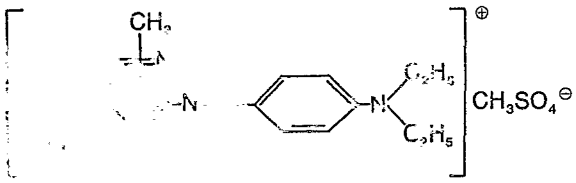

welche einen pH-Wert von ca. 1,5 bis 2,0 aufweist, indirekt mit heissem Wasser auf 50° aufgeheizt und innerhalb 20 Minuten portionenweise mit 132 g wasserfreiem Natriumsulfat versetzt und während weiterer 30 Minuten gerührt. Anschliessend wird das Gemisch während 1 bis 2 Stunden bis zur Phasentrennung stehen gelassen.

Als leichte Phase scheidet sich eine dunkle, konzentrierte Farbstofflösung ab. Die schwere wässrige Phase enthält eine unwesentliche Menge Farbstoff. Diese Phase wird via Untenauslauf abgetrennt.

Die leichte Farbstoffphase (Gewicht ca. 135 g), enthält ca. 38% des Farbstoffsalzes obiger Konstitution als Methylsulfatsalz und ca. 14% als Sulfatsalz, ca. 36% Wasser und ca. 12% anorganisches Salz (vorwiegend $Na_2SO_4$). Das bedeutet einen etwa 4mal so hohen Farbstoffgehalt wie in der eingesetzten, aus der Synthese erhaltenen Farbstofflösung.

d) Die unter c) erhaltene konzentrierte Farbstofflösung von 135 g wird in 460 ml Wasser bei 25° gelöst. Unter Rühren versetzt man mit 108 g Kaliumjodid und leitet die Kristallisation durch Zugabe von einigen Impfkristallen ein. Man rührt während 15 Stunden bei 20–25°, wobei das Farbsalz-Isomerengemisch der Formel

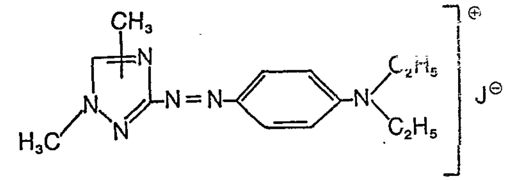

ausfällt und abfiltriert werden kann. Man trocknet den Farbstoff im Vakuum bei 65° und erhält so 70 g trockenes Farbsalz, welches Polyacrylnitril-Fasern in roten Tönen färbt.

Beispiel 4

7,1 g der Farbbase der Formel

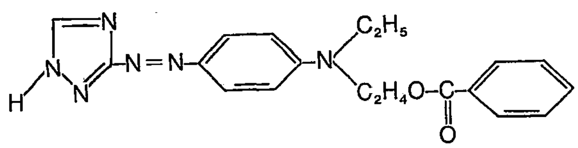

werden in 15 ml Wasser bei 10° mit 0,6 g Magnesiumoxid angeschlämmt und mit 5,5 g Dimethylsulfat versetzt. Während einer Stunde rührt man bei ca. 15°, dann eine weitere Stunde bei 20°. Nach beendeter Methylierung/Quaternierung heizt man auf 98°, stellt das Volumen mit Wasser auf 75 ml und klärt die Lösung mit Zusatz von 0,5 g Aktiv-Kohle bei ca. 95°.

Zur etwa 40° warmen Farbstofflösung gibt man 37 g festes Natriumbromid und leitet die Kristallisation mit Impfkristallen ein. Man rührt noch 2 Stunden bei Raumtemperatur, filtriert das Farbsalz-Isomerengemisch der Formel

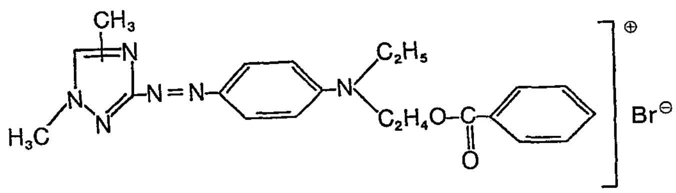

und erhält nach der Trocknung im Vakuum bei 50° das Farbsalz mit 9,2 g Ausbeute. Dieses ist sehr gut wasserlöslich, nicht hydroskopisch und erzeugt auf Polyacrylnitrilfasern eine rote Färbung mit guten Echtheiten.

Auf analoge Art und Weise erhält man die folgenden Farbstoffsalze:

5.

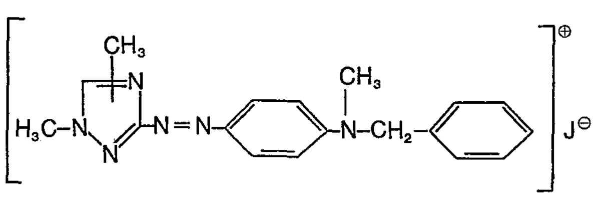

6.

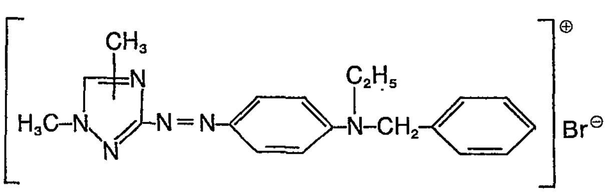

7. 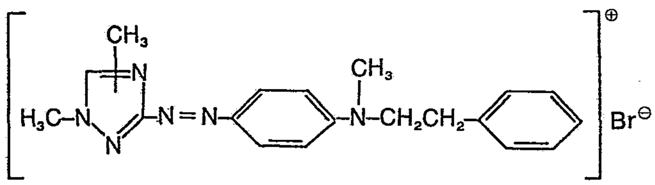

8. 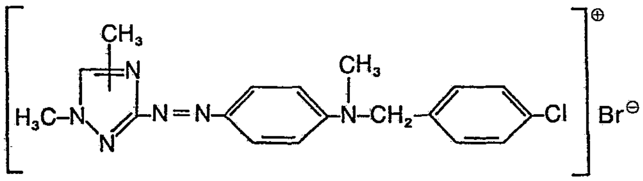

9. 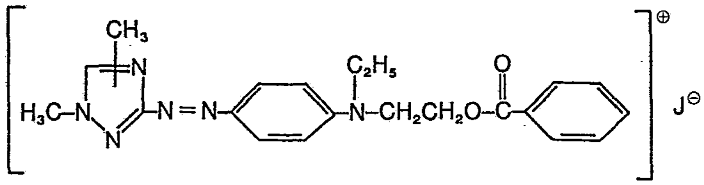

10. 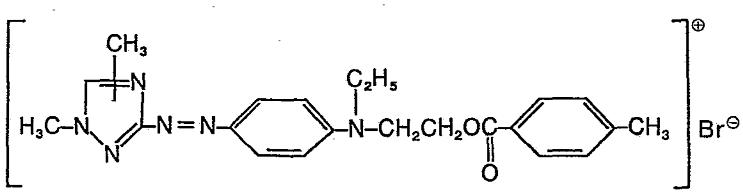

11. 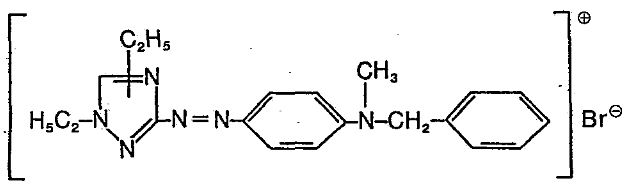

12. 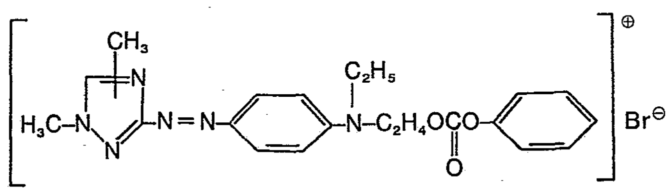

**Patentansprüche**

1. Kristalline Salze von Triazolfarbstoffen der Formel I

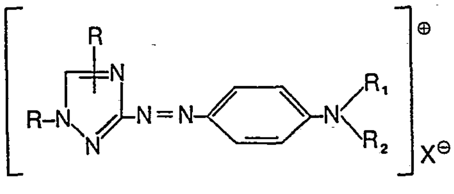

(I)

worin bedeuten:

R den $CH_3$- oder $C_2H_5$-Rest,

$R_1$ einen $C_1$–$C_4$-Alkyl-Rest,

$R_2$ einen gegebenenfalls substituierten $C_1$–$C_4$-Alkyl-Rest, und

X das Br- oder J-Ion.

2. Triazolfarbstoffe der Formel I gemäss Anspruch 1, dadurch gekennzeichnet, dass $R_1$ einen $C_1$–$C_4$-Alkylrest, $R_2$ einen substituierten $C_1$–$C_4$-Alkylrest und R und X die unter Formel I angegebene Bedeutung haben.

3. Triazolfarbstoffe der Formel I gemäss Anspruch 1, dadurch gekennzeichnet, dass R den $CH_3$-Rest bedeutet.

4. Triazolfarbstoffe der Formel I gemäss Anspruch 1, dadurch gekennzeichnet, dass $R_1$ den $CH_3$- oder $C_2H_5$-Rest bedeutet.

5. Triazolfarbstoffe der Formel I gemäss Anspruch 1, dadurch gekennzeichnet, dass $R_2$ einen

durch Phenyl oder einen Benzoyloxirest substituierten $C_1$–$C_4$-Alkylrest bedeutet.

6. Triazolfarbstoffe der Formel I gemäss Anspruch 1, dadurch gekennzeichnet, dass $R_2$ den Benzylrest bedeutet.

7. Triazolfarbstoffe der Formel I gemäss Anspruch 1, dadurch gekennzeichnet, dass $R_2$ den Benzoyloxiethylrest bedeutet.

8. Triazolfarbstoffe der Formel I gemäss Anspruch 1, dadurch gekennzeichnet, dass X das Brom-Ion bedeutet.

9. Triazolfarbstoffe der Formel I gemäss Anspruch 1, dadurch gekennzeichnet, dass R und $R_1$ je den $CH_3$-Rest und $R_2$ den Benzylrest bedeuten.

10. Verfahren zur Herstellung von Triazolfarbstoffen der Formel I gemäss Anspruch 1, dadurch gekennzeichnet, dass man ein Alkylsulfatsalz der Formel II

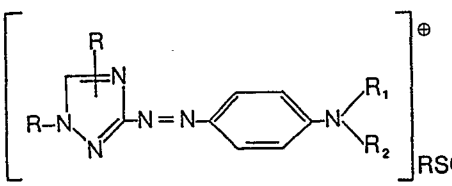

(II)

worin die Symbole R, $R_1$ und $R_2$ die unter Formel I angegebene Bedeutung haben im wässrigen Medium mit Bromwasserstoffsäure oder Iodwasserstoffsäure oder deren Ammonium-, Alkali- oder Erdalkalisalze umsetzt.

11. Verfahren gemäss Anspruch 10, dadurch gekennzeichnet, dass man bei Raumtemperatur arbeitet.

12. Verwendung der Triazolfarbsalze der Formel I gemäss Anspruch 1 oder erhalten gemäss Anspruch 10 zum Färben und Bedrucken von Textilmaterialien welche mit kationischen Farbstoffen färbbar sind.

**Claims**

1. A crystalline salt of a triazole dye of the formula I

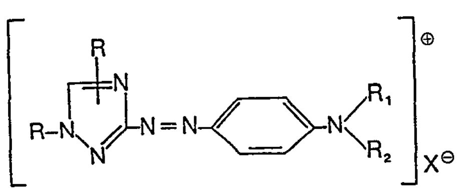

(I)

wherein

R is the $CH_3$ or $C_2H_5$ group,

$R_1$ is a $C_1$–$C_4$alkyl group,

$R_2$ is an unsubstituted or substituted $C_1$–$C_4$alkyl group, and

X is the bromine or iodine ion.

2. A triazole dye of the formula I according to claim 1, wherein $R_1$ is a $C_1$–$C_4$alkyl group, $R_2$ is a substituted $C_1$–$C_4$alkyl group, and R and X have the meanings defined for the formula I.

3. A triazole dye of the formula I according to claim I, wherein R is the $CH_3$ group.

4. A triazole dye of the formula I according to claim 1, wherein $R_1$ is the $CH_3$ or $C_2H_5$ group.

5. A triazole dye of the formula I according to claim 1, wherein $R_2$ is a $C_1$–$C_4$alkyl group substituted by phenyl or by a benzoyloxy group.

6. A triazole dye of the formula I according to claim 1, wherein $R_2$ is the benzyl group.

7. A triazole dye of the formula I according to claim 1, wherein $R_2$ is the benzoyloxy ethyl group.

8. A triazole dye of the formula I according to claim 1, wherein X is the bromine ion.

9. A triazole dye of the formula I according to claim 1, wherein each of R and $R_1$ is the $CH_3$ group, and $R_2$ is the benzyl group.

10. A process for producing a triazole dye of the formula I according to claim 1, which process comprises reacting an alkylsulfate salt of the formula II

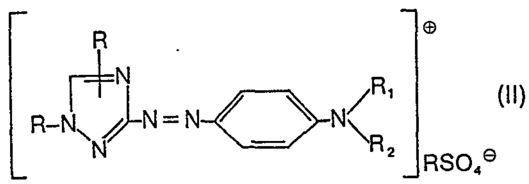

(II)

wherein the symbols R, $R_1$ and $R_2$ have the meanings defined for the formula I, in an aqueous medium with hydrobromic acid of hydriodic acid, or with an ammonium, alkali metal or alkaline earth metal salt thereof.

11. A process according to claim 10, wherein the reaction is performed at room temperature.

12. Use of a triazole dye salt of the formula I according to claim 1, or obtained according to claim 10, for dyeing and printing textile materials which are dyeable with cationic dyes.

**Revendications**

1. Sels cristallisés de colorants triazoliques de formule (I):

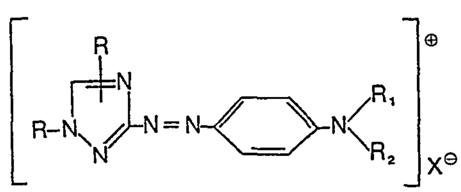

(I)

dans laquelle:

R désigne le reste $CH_3$ ou $C_2H_5$,

$R_1$ est un reste alkyle en $C_1$–$C_4$,

$R_2$ est un reste alkyle en $C_1$–$C_4$ éventuellement substitué, et

X est l'ion Br ou I.

2. Colorants triazoliques de formule (I) selon la revendication 1, caractérisés par le fait que $R_1$ est un reste alkyle en $C_1$–$C_4$; $R_2$ est un reste alkyle en $C_1$–$C_4$ substitué; et R et X ont les significations données sous la formule (I).

3. Colorants triazoliques de formule (I) selon la revendication 1, caractérisés par le fait que R désigne le reste $CH_3$.

4. Colorants triazoliques de formule (I) selon la revendication 1, caractérisés par le fait que $R_1$ désigne le reste $CH_3$ ou $C_2H_5$.

5. Colorants triazoliques de formule (I) selon la revendication 1, caractérisés par le fait que $R_2$ est un reste alkyle en $C_1$–$C_4$ substitué par un groupe phényle ou un groupe benzoyloxy.

6. Colorants triazoliques de formule (I) selon la revendication 1, caractérisés par le fait que $R_2$ désigne le reste benzyle.

7. Colorants triazoliques de formule 1, selon la revendication 1, caractérisés par le fait que $R_2$ désigne le reste benzoyloxyéthyle.

8. Colorants triazoliques de formule (I) selon la revendication 1, caractérisés par le fait que X désigne l'ion brome.

9. Colorants triazoliques de formule (I) selon la revendication 1, caractérisés par le fait que R et $R_1$ désignent chacun le reste $CH_3$, et $R_2$ désigne le reste benzyle.

10. Procédé pour la préparation de colorants triazoliques de formule (I) selon la revendication 1, caractérisé par le fait qu'on fait réagir un sel alkylsulfate de formule (II):

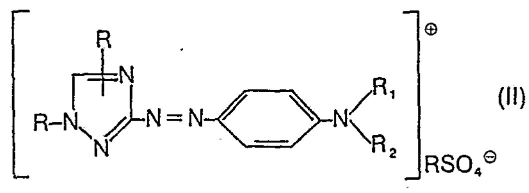

(II)

dans laquelle les symboles R, $R_1$ et $R_2$ ont les significations données sous la formule (I), en milieu aqueux, avec de l'acide bromhydrique ou de l'acide iodhydrique avec leurs sels d'ammonium, alcalins ou alcalino-terreux.

11. Procédé selon la revendication 10, caractérisé par le fait qu'on opère à la température ambiante.

12. Utilisation des sels de colorants triazoliques de formule (I) selon la revendication 1, ou obtenus selon la revendication 10, pour teindre et imprimer des matières textiles qui sont teignables avec les colorants cationiques.